# EUROPEAN PATENT APPLICATION

(11) **EP 0 717 534 A1**
(43) Date of publication of application: **19.06.1996**
(21) Application number: 95203322.3
(22) Date of filing: 01.12.1995
(51) Int. Cl.: H04L 12/56, H04Q 11/04

(54) **Device for indexing ATM cells**

(30) Priority: 16.12.1994 NL 9402141
(71) Applicant: Koninklijke PTT Nederland N.V., NL-2509 CH The Hague (NL)
(72) Inventor: Feijen, Maurice M., NL-2593 ED The Hague (NL)

(57) **Abstract**

Method and device for assigning a local index having a reduced index length to data cells which are to be processed locally and which have a global index, such as ATM cells having a VPI/VCI. Use is made of conversion tables which are directly addressed because of the fast processing. In order to make efficient use of the memory capacity, use is not made of one conversion table, but of one primary table and various secondary tables, the primary table being addressed by the most significant part of the global index. The value read out selects one of the secondary tables. The selected secondary table is addressed by the least significant part of the global index. The value read out therefrom forms, preferably together with the value read out of the primary table, the local index. Prior writing-in of index values into the primary table and secondary tables for locally permitted global index values (VPI/VCIs) takes place in accordance with the same pattern.

## Description

### A. BACKGROUND OF THE INVENTION

The invention relates to a method and device for assigning indices to data cells.

In telecommunication networks, data cells, such as ATM cells, have to be indexed at various locations - that is to say, a locally unique index is assigned to each data cell which appears - before being capable of being processed locally. The reason for this is that locally unique indices can be shorter than globally unique indices, such as ATM VPI/VCIs (virtual path/channel identifiers) which are 24 or 28 bits long. Conversion of the fairly long VPI/VCIs into shorter local indices increases the local processing speed (for example, in policing elements, switches etc.). A condition is that the indexing takes place within one slot time. It is also important that the indexing time is as short as possible because of delay times.

ATM data cells are identified by means of their VPI/VCIs, which are standardized at 24 bits at the user end, or 28 bits at the network end; globally, the capacity is therefore 2^24 or 2^28 different VPI/VCIs.

Since a maximum of 2^10 different VPI/VCIs may be assumed at local level for the near future, the VPI/VCIs can be (re)indexed with indices of 10 bits.

The most obvious method of locally indexing is to store the 2^10 locally permitted VPI/VCIs in one table. In this connection, one table can be used containing, for example, 1024 rows and 2 columns: one column containing the subset of 1024 locally permitted VPI/VCIs and one column containing local indices assigned thereto. The VPI/VCI of every data cell arriving locally is compared with the various VPI/VCIs from the first column and, in the event of coincidence, the associated index from the second column is assigned to the data cell. The comparison of the VPI/VCI of the arriving data cell with the VPI/VCIs from the first column of the index table, however, takes too much time (both the VPI/VCIs of the arriving data cell and the VPI/VCIs in the first column are 24 or 28 wide).

A faster method is to use a one-column index table containing 2^24 or 2^28 input addresses instead of a two-column index table. The indices are stored in one column at locations whose addresses coincide with the values of the locally permitted VPI/VCIs. The index to be assigned to a data cell which has arrived locally is read directly out of the table at the address which is equal to the VPI/VCI value of the data cell which has arrived. This direct addressing instead of comparing VPI/VCI values one by one makes the processing appreciably faster. However, it requires a table containing, respectively, 2^24 (= 16777220) or 2^28 (= 268435500) input addresses (namely, those suitable for the entire range of VPI/VCI values), of which only 2^10 (= 1024) input addresses are used (a fraction of only 0.006% or 0.0004%, respectively). It is clear that the hardware necessary for this option is anything but efficiently used.

The invention discloses a device in which use is made of direct addressing, but the buffer capacity is appreciably better utilized.

### B. SUMMARY OF THE INVENTION

According to the invention, the registration of VPI/VCIs and the subsequent conversion of the indices registered in the headers of data cells into shorter indices on arrival of said data cells at the respective location is performed in two steps. In this connection, use is made of a primary table and various secondary tables. If desired, steps may be added in which tertiary, quaternary etc. tables are used.

The most significant part of the VPI/VCI - in practice, the VPI - will be denoted below by MSP (most significant part). The least significant part of the VPI/VCI - in practice, the VCI - will be denoted below by LSP (least significant part). Where precisely the separation is drawn between the MSP and the LSP is in fact of lesser importance. However, for the sake of convenience, 24 bits long VPI/VCIs, 12 bits long MSPs and 12 bits long LSPs will be assumed below.

In the assignment of a local index to a VPI/VCI and the registration thereof - so that data cells having said VPI/VCI values in their header can subsequently be successfully processed locally - the MSP of the VPI/VCI is first used as input address for said primary table. Said table has 2^12 (= 4096) input addresses (since the MSPs are each 12 bits long). With a capacity of 2^10 locally permissible VPI/VCIs (containing 2^10 different MSPs in the most extreme case), a maximum of 25% (2^10/2^12) of the primary table is therefore used. Written in at each input address in the primary table denoted by the MSP value is a code which refers to a certain secondary table. The reference codes are unique within the primary table and also preferably form the first (most or least significant) part of the local index. In the most extreme case where the MSPs of all the 2^10 different VPI/VCIs are also different, 2^10 secondary tables are necessary, each containing 2^12 input addresses (since the LSPs are each 12 bits long). The gain with respect to the use of one directly addressable indexing table is then still a factor of 4, namely 1 primary table plus 2^10 secondary tables, each containing 2^12 input addresses (a total of approximately 2^22 input addresses) with respect to one table containing 2^24 input addresses. In practice, however, there are appreciably fewer different VPIs (and therefore MSPs), as a result of which the number of secondary tables can remain restricted to less than 10^7. The gain with respect to the use of one indexing table containing 2^24 inputs is 2^7·2^12/2^24: a factor of 2^5 (= 32).

The first part of the index is therefore written into the primary table and also forms the selection code for the secondary table, in which the second part of the index is registered. The second part of the index is written into said selected secondary table at an input address which is equal to the value of the LSP of the VPI/VCI. The value written in must be unique within said secondary table (just as the values written into the primary table have to be unique within said table).

The above deals with the inputting of a local subset of global VPI/VCIs to which local indices are assigned, which local indices are partly registered in the primary table - at input addresses which are identical to the MSPs of said VPI/VCIs - and partly into secondary tables selected by the primary table at input addresses which are identical to the LSPs of the VPI/VCIs.

It should also be pointed out that it is also possible to use only the values registered in the secondary table as local indices. The advantage of this is that the registrations in the primary table and secondary table, respectively, do not have to be combined, which makes a difference in processing time. A condition is, however, that the codes registered in the secondary table must not only be unique in the specific secondary table, but they must also be unique in all the other secondary tables. The Applicant prefers, however, to combine the value written into the primary table with the value written into the selected secondary table to form a local index, which increases the capacity in terms of local indices.

In addition, it should be pointed out that the entire subset of locally permitted VPI/VCIs does not have to be registered in one go. Said subset may be constantly changed during the operational use of the system. It is clear that, before a local index can be assigned to an arriving data cell, the global index of said data cell must always be incorporated in the system. In the primary table, there must be a valid reference to a secondary table at the address specified by the MSP and there must be a valid index at the address in said secondary table specified by the LSP. In accepting VPI/VCIs, the value (content) of said VPI/VCIs can be inspected and some may be registered and others not, for example, by a system manager, but attention may also be paid solely to the maximum number (2^10), a maximum of 2^10 (arbitrary) VPI/VCIs being registered.

### C. EXEMPLARY EMBODIMENTS

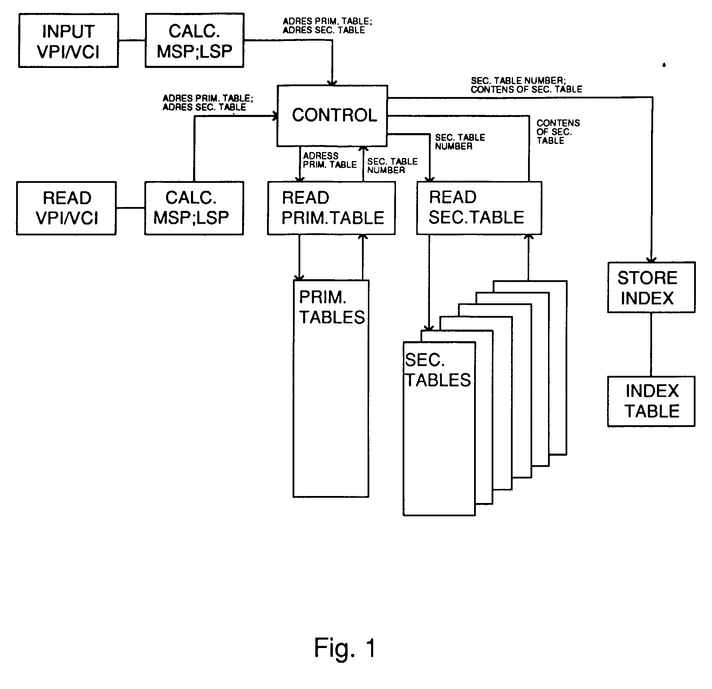

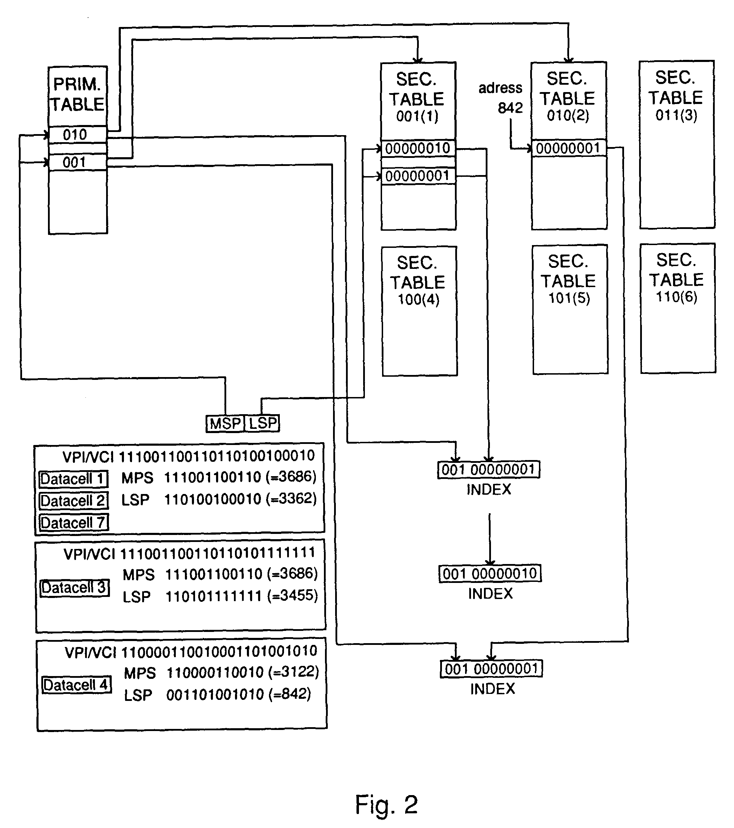

Fig. 1 shows diagrammatically a device in which the method according to the invention can be performed. Fig. 2 shows diagrammatically the registration and indexing process by reference to a few examples.

In the device of Fig. 1, VPI/VCIs can be inputted which are converted by the device into unique (local) index values which are stored in the device. The headers of data cells can also be read out by the device and the indices, stored in the device, of the VPI/VCIs of said data cells can be looked up, read out and temporarily stored.

Locally permitted VPI/VCIs can be inputted by means of an input device. A calculating element connected thereto determines the most significant part (MSP) and the least significant part (LSP) of the VPI/VCI inputted. The MSP value is used by a control element to address a primary table. If no significant value is found at said address in the primary table (namely, if no previous write-in has yet taken place at said address), the control element generates a value which has not previously been used in the primary table and which is written in at said address in the primary table. Either the value found at said address (already written in previously) or the value just written in at said address is then used by the control element in order to select a secondary table. A value which is either unique only within the secondary table or unique within all, secondary tables is also written into the selected secondary table. In the first case, the local index is formed by the total of the value written into the primary table and the value written into the secondary table. If only the entry in the secondary table is used as index, the entries must be unique within all the secondary tables since, after all, the indices must be unique representations of the VPI/VCI values inputted.

After the registration of a locally permitted VPI/VCI in the system, local indices can be assigned to data cells. When a data cell arrives, a reading element reads out the VPI/VCI from the header of the data cell and the MSP and LSP values are then determined. The control element causes the primary table to be read out at the address determined by the MSP value. The content of the primary table at said address is used by the control element to select the correct secondary table. If no valid value, for example a default value "000", is found at the address in the primary table determined by the MSP, it is concluded therefrom that the VPI/VCI has not been written into the system and the data cell is therefore rejected (unless the system is configured in such a way that the still unregistered VPI/VCI of the data cell is nevertheless written in as a locally valid VPI/VCI). If a non-default value is found, the secondary table selected by said value is then read out at the address determined by the LSP value. The value found there, possibly supplemented by the value found in the primary table (equal to the number of the secondary table) forms the local index which is assigned to the data cell which has arrived for further processing. It the value found in the selected secondary table is not valid, for example a default value "000000", then it is evident that the VPI/VCI has not previously been registered in the system, so that the data cell must be rejected or the VPI/VCI thereof still has to be registered. The local indices assigned to the data cells which have arrived are temporarily stored in an index table for as long as the data cells are being locally processed. Five different VPI/VCIs are shown below on which the operations described above have been performed; in practice, these are, for example, a maximum of 1024 different VPI/VCIs.

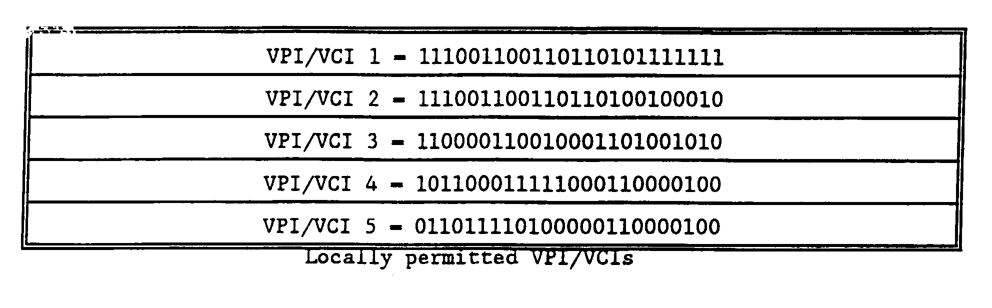

The VPI/VCI is 24 bits long; the MCP is 12 bits and the LSP is also 12 bits. A value which is always 1 greater than the value last registered is registered at the address in the primary table determined by the MSP. In the case where there is already a non-default value at said address, that value is not overwritten (see processing of VPI/VCIs 1 and 2 below). The values in the primary table are 3 bits long in the example below, referring to a maximum of 2^3 secondary tables. In practice, these are between 64 and 128 secondary tables, indicated by 7-bit values in the primary table. In the present example, the decimal value of the MSP of the first VPI/VCI is 3686 and the value 001 (binary) is written into the primary table at address location 3686, referring to the first secondary table. The value 00000001 is then written into said secondary table 001 at address location 3455 (decimal LSP value).

The subsequent VPI/VCIs are likewise processed by the system. The decimal value of the MSP of VPI/VCI 2 is, just like VPI/VCI 1, 3686. There is already a non-default value, namely 001 (default is 000), at address 3686 of the primary table and that value is not overwritten. Secondary table 001, into which table the (binary) value 00000010 (the last value written into the secondary table increased by 1) is written, is therefore selected in this case as well.

The MSP of VPI/VCI 3 is 3122 and the LSP is 842. The binary value 010 (the last registration plus one) is therefore written into the primary table at address 3122 and secondary table 010 (= 2), into which the value 00000001 is written at address 842, is then selected by the control element. Of the five VPI/VCI registrations below, the first three are shown diagrammatically in Fig. 2.

A few examples are shown below of the indexing of locally arriving data cells - after the inputting of valid VPI/VCIs. The VPI/VCI of data cell 1 is read out and the MSP and LSP determined. At the address (3686) specified by the MSP of the primary table, the value registered there (001) is read out and subsequently the value at the address 3362 specified by the LSP is read out in secondary table 001. In the examples below, the indices to be assigned to the data cells are formed by a "high index" which is equal to the value read out in the primary table and a "low index" which is formed by the value read out of the secondary table. As a consequence of the previous writing into the system of the VPI/VCI of the data cell which has arrived, which writing-in was discussed above, the values read out in the

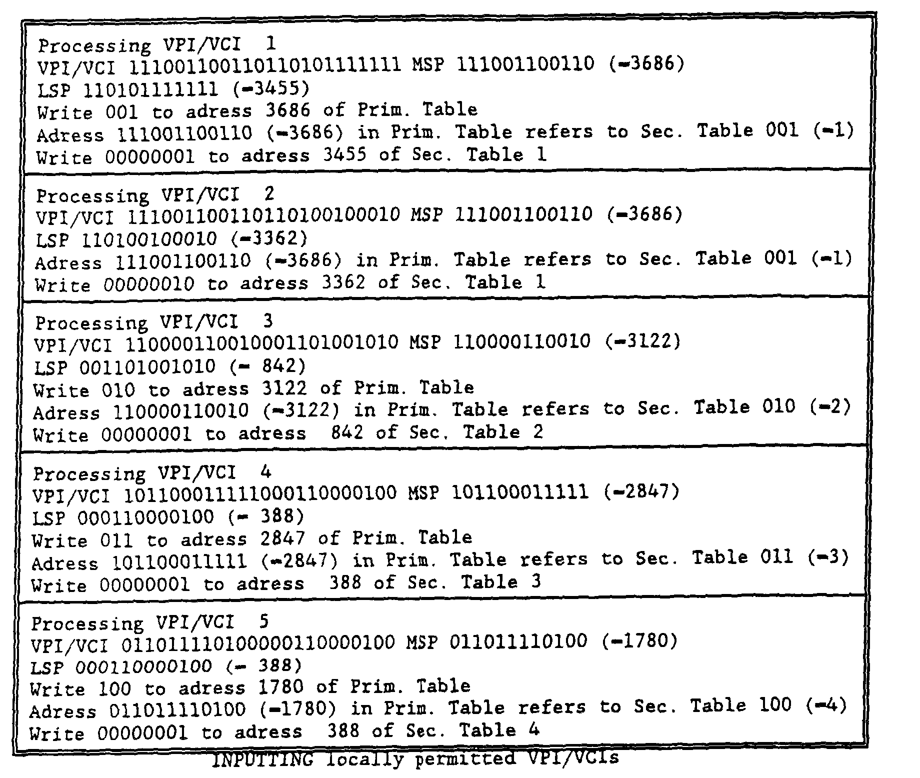

primary and secondary table, respectively, are 001 and 00000010, as a result of which the required index becomes 00100000010. In the example below, the subsequent data cell has the same VPI/VCI in its header and the same index is therefore assigned to said data cell. The MSP of the VPI/VCI read out of the header of the third data cell arriving is in fact identical to that of the two preceding data cells, but the LSP is different. The low index is therefore read out of secondary table 001, just as in the preceding cases, but now at address 3455, which yields the value 00000001, as a result of which the index 00100000001 is assigned to said data cell 3. The reading-out of the VPI/VCIs of the subsequent data cells and the conversion into a unique local index proceeds in the same way. Note that data cell 7 again has the same VPI/VCI as data cells 1 and 2 and is thus assigned the same index. The method followed is also illustrated in Fig. 2, where the processing of the data cells 1, 2 and 7 having identical VPI/VCI, of data cell 3 and of data cell 4 is shown.

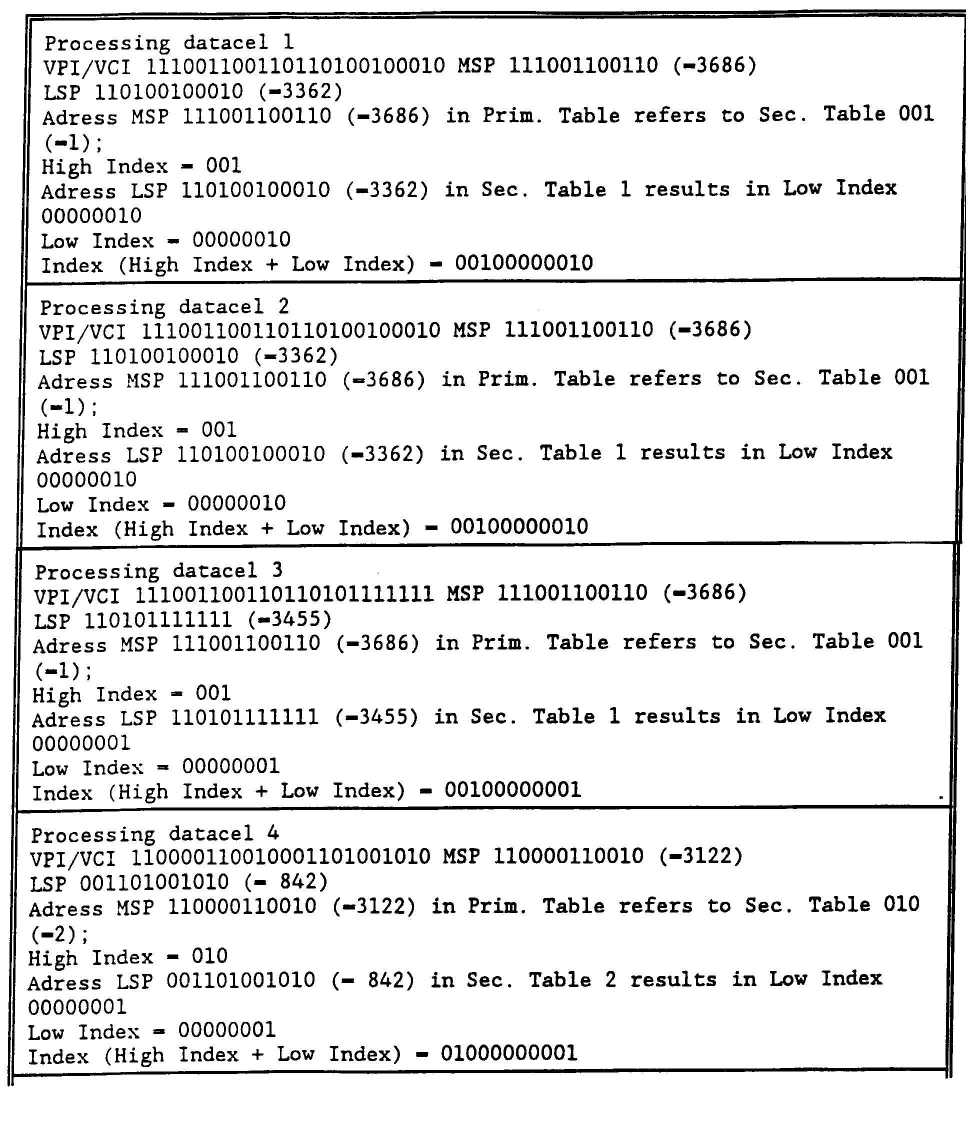

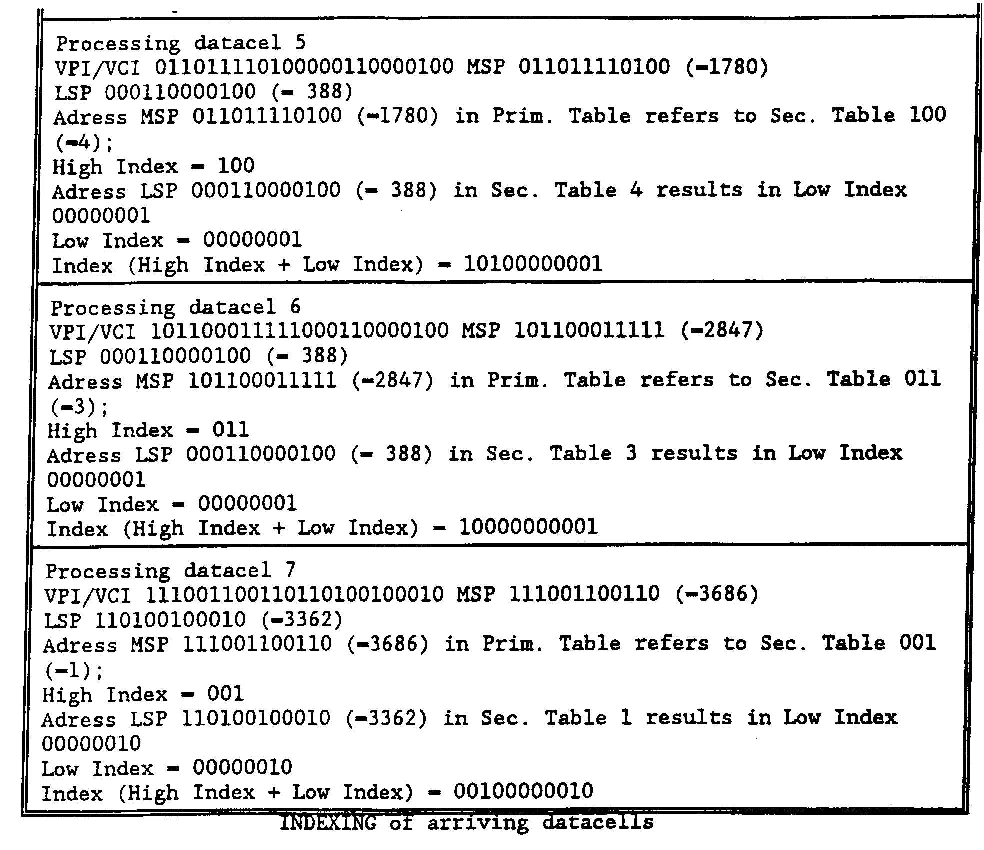

It is pointed out that it may happen that only the VPI is of importance in the processing of data cells. For example, a routing element (a switch) may be adjusted so that arriving data cells are transferred to the various outputs on the basis of their different VPI values. If the routing element makes use of local indices, the indices must be assigned solely on the basis of the different VPIs, without taking account of the VCI values. If the mechanism described above is to be universally applicable for indexing both on the basis of the VPI/VCIs and on the basis of VPIs alone, a control bit which specifies the option of which use is being made must be accommodated, for example, in a separate column of the primary table. In the cases where only the VPI alone is of importance, no use has to be made of a secondary table since the VPI is completely constituted by the MSP; the index is then determined solely by the registration in the primary table, possibly supplemented by a default value for the above mentioned "low index".

In addition, it is pointed out that, as was pointed out at the outset, although the precise separation between the MSP and the LSP is of subordinate importance for the invention, the said drawing of the separation does have implications for the flexibility and the memory size of the system. Where precisely the separation is drawn is related, inter alia, to the stochastic behaviour of VPIs and VCIs (it was already stated above, for example, that the number of different VPIs is relatively small in practice) and the desired system properties. That the drawing of the separation between the MSP and the LSP influences the total memory size of the indexing system is shown by the table below, which shows the memory size for different MSP/LSP combinations. The table also shows the total number of table addresses in relation to the number of table addresses which would be necessary if, as discussed under A., one directly addressable table were to be used (having in this case 2^24 input addresses). The table below also shows the situation discussed above in which the separation of the MSP and the LSP is drawn at "12/12"; the total number of input addresses in that case is only 25% of the number which would be necessary when using one table containing 2^24 addresses.

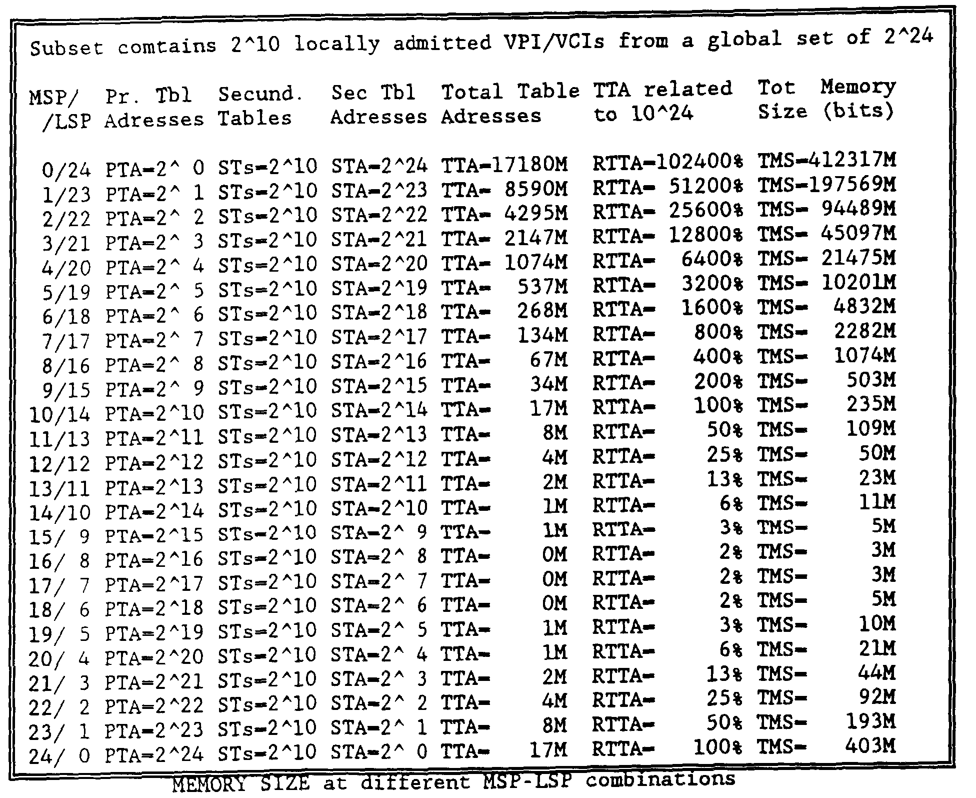

### D. REFERENCES

None

## Claims

1. Method for assigning local indices at a certain location to data cells which are provided with global indices, characterized by an input step which is performed for each global index (VPI/VCI) of data cells to be permitted locally, in which, for each of said global indices, there is written into a primary table at an address corresponding to a first part (MSP) of said global index a reference code which is unique within said primary table and which refers to one of a plurality of secondary tables, and in which there is then written into the secondary table indicated by said reference code, at an address corresponding to a second part (LSP) of said global index, an index which is unique within said secondary table; and also by an indexing step which is always performed when a data cell arrives at said location, in which the global index (VPI/VCI) of a locally arriving data cell is read out and, in said primary table, at an address corresponding to a first part (MSP) of said global index, a reference code registered there is read out, and in which, in the secondary table indicated by the reference code, at an address corresponding to a second part (LSP) of said global index, an index registered there is read out.

2. Method according to Claim 1, characterized in that said first part of the global index is the most significant part thereof, while said second part of the global index is the least significant part thereof.

3. Method according to Claim 1, characterized in that the local index is formed solely by the index registered in the secondary tables.

4. Method according to Claim 1, characterized in that the local index is formed by the index registered in the secondary tables, supplemented by the reference code from the primary table.

5. Method according to Claim 4, characterized in that the reference code forms the most significant part and the index from the secondary table forms the least significant part of the local index.

6. Device for assigning local indices at a certain location to data cells which are provided with global indices, characterized by control means, a directly addressable primary table and a number of directly addressable secondary tables, in which the control means cause a reference code which refers to one of a plurality of secondary tables to be written into a primary table at an address corresponding to a first part of said global index for every global index of locally permissible data cells and causes an index which is unique within said secondary table to be written into the secondary table indicated by the reference code at an address corresponding to a second part of said global index.

7. Device for assigning local indices at a certain location to data cells which are provided with global indices, characterized by control means, a directly addressable primary table and a number of directly addressable secondary tables, in which the control means cause the global index of each locally arriving data cell to be read out and in a primary table, at an address corresponding to a first part of said global index, cause a reference code registered there to be read out and, in a secondary table indicated by the reference code, at an address corresponding to a second part of said global index, cause a local index registered there to be read out.
